# FASCICULE DE BREVET EUROPEEN

(11) **EP 2 670 663 B1**
(45) Date de publication et mention de la délivrance du brevet: **28.03.2018**
(21) Numéro de dépôt: 12707850.9
(22) Date de dépôt: 02.02.2012
(51) Int. Cl.: B64D 33/02

(54) **PROCÉDÉ DE FABRICATION D'UNE STRUCTURE D'ENTRÉE D'AIR DE NACELLE DE TURBORÉACTEUR**
VERFAHREN ZUR HERSTELLUNG EINER LUFTEINLASSSTRUKTUR FÜR EINE TURBODÜSENMOTORGONDEL
METHOD FOR MANUFACTURING AN AIR-INTAKE STRUCTURE FOR A TURBOJET-ENGINE NACELLE

(30) Priorité: 04.02.2011 FR 1150890
(43) Date de publication de la demande: 11.12.2013
(73) Titulaire: Safran Nacelles, 76700 Gonfreville-l'Orcher (FR)
(72) Inventeur: DESJOYEAUX, Bertrand, F-76310 Sainte Adresse (FR); HUBIER, Olivier, F-76600 Le Havre (FR)
(74) Mandataire: Gaillarde, Frédéric F. Ch.
(86) Numéro de dépôt international: PCT/FR2012/050230
(87) Numéro de publication internationale: WO 2012/104560

(56) Documents cités:
- EP-A1- 1 013 910
- FR-A1- 2 922 522
- FR-A1- 2 929 991

## Description

La présente invention se rapporte à une structure d'entrée d'air pour nacelle de turboréacteur.

Comme cela est connu en soi, un ensemble propulsif d'aéronef comprend classiquement un turboréacteur logé à l'intérieur d'une nacelle.

La nacelle présente généralement une structure annulaire comprenant une entrée d'air en amont du turboréacteur, une section médiane destinée à entourer une soufflante du turboréacteur et son carter, une section aval destinée à entourer la chambre de combustion du turboréacteur et abritant le cas échéant des moyens d'inversion de poussée. Elle peut être terminée par une tuyère d'éjection dont la sortie est située en aval du turboréacteur.

La structure d'entrée d'air sert à optimiser la captation d'air nécessaire à l'alimentation de la soufflante du turboréacteur et à le canaliser vers cette soufflante.

Une structure d'entrée d'air comprend notamment en amont une structure de bord d'attaque couramment appelée « lèvre » d'entrée d'air.

La lèvre d'entrée d'air assure la captation de l'air et est rattachée au reste de la structure d'entrée d'air qui assure la canalisation de l'air capté vers le turboréacteur.

Pour ce faire, le reste de la structure d'entrée d'air présente une structure sensiblement annulaire comprenant une surface externe assurant la continuité aérodynamique externe de la nacelle et une surface interne assurant la continuité aérodynamique interne de la nacelle. La lèvre d'entrée d'air assure la jonction amont entre ces deux parois.

L'ensemble de la structure d'entrée d'air est rattaché en amont d'une section médiane de la nacelle et d'un carter de soufflante.

Une structure de lèvre d'entrée d'air peut comprendre de nombreux composants. Elle comporte classiquement notamment une peau aérodynamique pouvant être en plusieurs secteurs éclissés entre eux, une ou plusieurs cloisons de renfort, un ou plusieurs profils de jonction pour les cloisons ou pour un rattachement au reste de la structure d'entrée d'air.

Actuellement, ces éléments peuvent être réalisés dans des matériaux hétérogènes, et notamment à partir d'alliages métalliques différents, typiquement à base d'aluminium et / ou de titane. Certains éléments peuvent également être réalisés en matériaux composites.

Aujourd'hui, ces éléments doivent être assemblés par fixation. Il s'ensuit un temps d'assemblage important et la perte de performances aérodynamiques liée à ces fixations et assemblages.

On connaît également des nacelles dites laminaires à structure d'entrée d'air présentant une continuité externe améliorant les performances aérodynamiques. Une telle structure est décrite notamment dans le document FR 2 906 568.

Actuellement, une telle structure laminaire peut être obtenue en regroupant la lèvre d'entrée d'air et le capot externe dans une structure unique monobloc, assurant donc l'absence de moyens d'attache et une surface aérodynamique externe optimisée.

La réalisation d'une telle structure monobloc n'est pas aisée et nécessite des moules et équipements dédiés et de taille adaptée. Elle reste donc coûteuse. Par ailleurs, il reste difficile de concilier dans une même technologie de fabrication (produit monobloc) une structure de lèvres qui peut présenter une épaisseur importante, et une structure de capotage qui supporte peu d'efforts et possède donc une épaisseur beaucoup plus faible. Les documents FR2922522, EP1013910 et FR2929991 montrent des structures d'entrée d'air aussi connues de l'état de la technique.

La présente invention vise à pallier ces inconvénients en permettant la mise en oeuvre d'une telle structure laminaire à partir de plusieurs parties initiales.

Pour ce faire, la présente invention consiste en un procédé de fabrication d'une structure d'entrée d'air d'une nacelle selon la revendication 1 et une structure d'entrée d'air selon la revendication 9. Ainsi en prévoyant des portions de recouvrement destinées à assurer la liaison entre les partie, il est possible d'assurer une surface externe optimisée ne présentant qu'un nombre extrêmement réduit d'accidents aérodynamiques.

On obtient ainsi une structure externe conciliant un profil externe assurant une traînée minimale et une masse optimisée en réduisant les éléments d'assemblage et le temps nécessaire à leur mise en place.

Des procédés de fabrication de type infusion de résine ou injection de résine dans une armature de renforts secs, notamment tissée, tressée ou drapée, par exemple, permettront en un nombre réduits d'opération d'obtenir l'ensemble de la structure externe d'entrée d'air.

Selon un mode de réalisation préférée, la solidarisation s'effectue par surmoulage des portions de recouvrement.

De manière préférentielle, les portions de recouvrement de la structure de lèvre avec le capot externe sont sensiblement longitudinales et au moins partiellement périphérique, de préférence totalement périphérique.

Avantageusement, la partie formant la lèvre d'entrée d'air est monobloc. Elle pourra notamment être réalisée en matériau composite et être obtenue par un procédé d'infusion de résine, injection de résine ou moulage par transfert de résine, par exemple.

Avantageusement, la partie constituant le capot externe est monobloc. Elle pourra notamment être réalisée en matériau composite et être obtenue par un procédé d'infusion de résine, injection de résine ou moulage par transfert de résine, par exemple.

Selon une variante de réalisation, la partie constituant le capot externe sera avantageusement réalisée en deux demi-parties, destinées notamment à être éclissées entre elles. Cela permet une adaptation plus aisée au diamètre de la lèvre d'entrée d'air, notamment pour tenir compte des tolérances de fabrication.

Préférentiellement, le capot externe forme un tonneau.

Selon une variante de réalisation, le capot externe forme une virole ouverte de manière à notamment faciliter l'intégration de la lèvre d'entrée d'air.

La présente invention se rapporte également à une structure d'entrée d'air pouvant être obtenue par un procédé selon l'invention.

La présente invention sera mieux comprise à la lumière de la description détaillée qui suit en regard du dessin annexé dans lequel :
- La figure 1 est une représentation schématique générale d'une structure d'entrée d'air selon l'invention.
- La figure 2 est une vue partielle schématique en coupe longitudinale de la structure d'entrée d'air de la figure 1.
- La figure 3 est une vue partielle agrandie de la zone de jonction entre la lèvre d'entrée d'air et la paroi externe de la structure d'entrée d'air de la figure 2.
- Les figures 4 à 6 illustrent schématiquement différentes variantes de mise en oeuvre d'une structure d'entrée d'air selon l'invention.
- La figure 7 est une représentation schématique en coupe d'une structure d'entrée d'air selon l'invention obtenue selon une autre variante de réalisation.

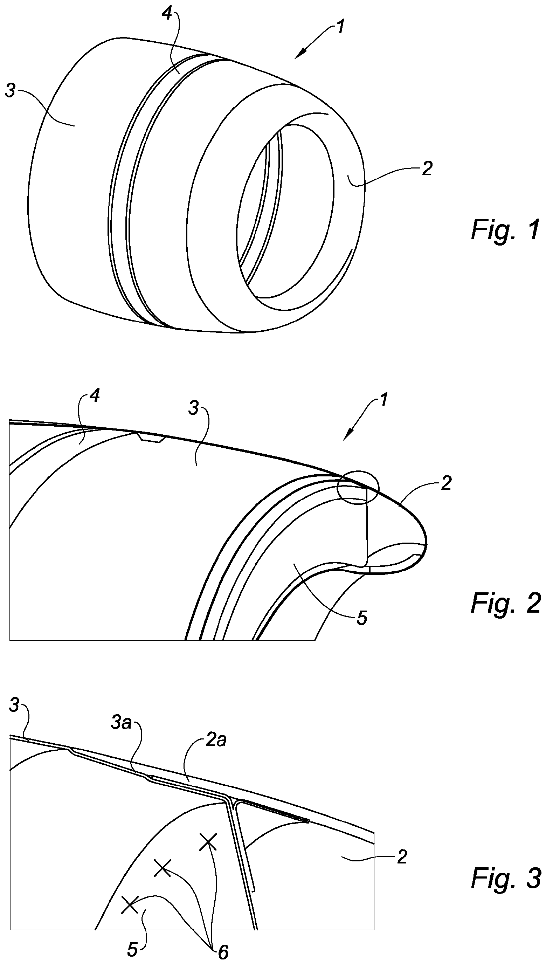

Une structure d'entrée d'air 1 selon l'invention, telle que représentée sur la figure 1 comprend une structure de lèvre d'entrée d'air 2, destinée à assurer la captation optimale de l'air vers une soufflante du turboréacteur, et une paroi externe 3 destinée à assurer la continuité aérodynamique externe de la nacelle et à laquelle est rattachée la structure de lèvre d'entrée d'air.

Le capot externe 3 se présente sur l'exemple représenté aux figures 1 à 3, sous la forme d'une virole intégralement périphérique formant un tonneau.

Le capot externe 3 peut intégrer un ou plusieurs raidisseurs par exemple un raidisseur circonférentiel 4 montré sur les figures 1, 2 et 4. Il peut intégrer toute autre forme de raidisseurs, en sections et directions longitudinale ou hélice, ou croisillons.

La jonction entre le capot externe 3 et la lèvre d'entrée d'air s'effectue au niveau d'une cloison de séparation amont 5 pouvant être intégrée soit à la lèvre d'entrée d'air soit à la virole, de préférence, au capot externe 3.

Conformément à l'invention, la fabrication de la structure d'entrée d'air 1 comprend les étapes suivantes visant à tout d'abord réaliser séparément les partie constitutives, à savoir en l'espèce le capot externe 3 et la lèvre d'entrée d'air 2, de manière à ce que chacune intègre au moins une portion de recouvrement, respectivement 3a, et 2a, avec la partie à laquelle elle est destinée à être rattachée. Les portions de recouvrement pourront notamment être réalisées par prolongation de peaux externes.

En l'espèce, la portion de recouvrement 2a de la lèvre d'entrée d'air est destinée à recouvrir la portion de recouvrement 3a du capot externe 3.

Les portions de recouvrement 3a et 2a sont conformées de manière à ce que une surface externe de la portion de recouvrement externe 2a assure une continuité avec une surface externe de la partie (capot 3) associée à la portion de recouvrement 3a interne.

Les portions de recouvrement sont ensuite solidarisées, notamment par collage et/ou à l'aide de moyens de fixations.

Si présente, la cloison amont 5 pourra être également utilisée pour la pose de fixations complémentaires 6.

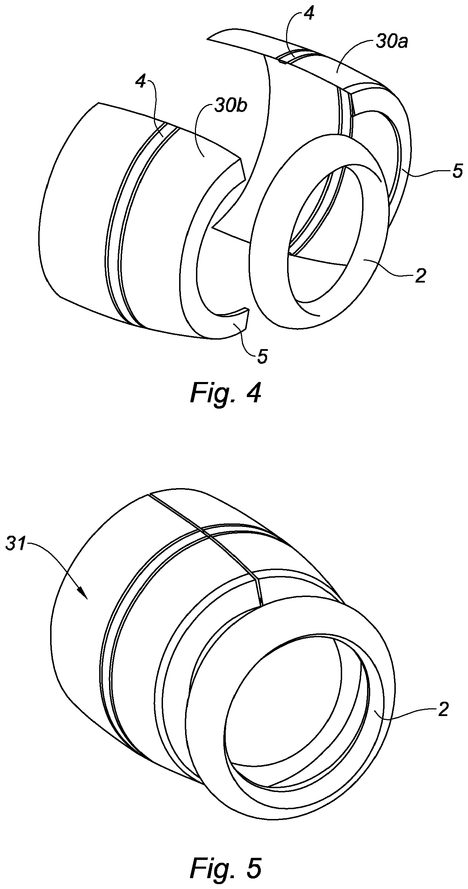

Les figures 4 à 6 montrent divers modes de réalisation des structures de capot externe 3 et de lèvre d'entrée d'air 2.

La figure 4 montre un capot externe réalisé en deux demi-parties 30a, 30b sensiblement hémi cylindriques qui pourront être notamment éclissées entre elles.

La figure 5 montre un capot externe réalisé sous la forme d'une virole ouverte, visant à faciliter l'intégration de la lèvre d'entrée d'air 2, notamment pour tenir compte de tolérances de fabrication.

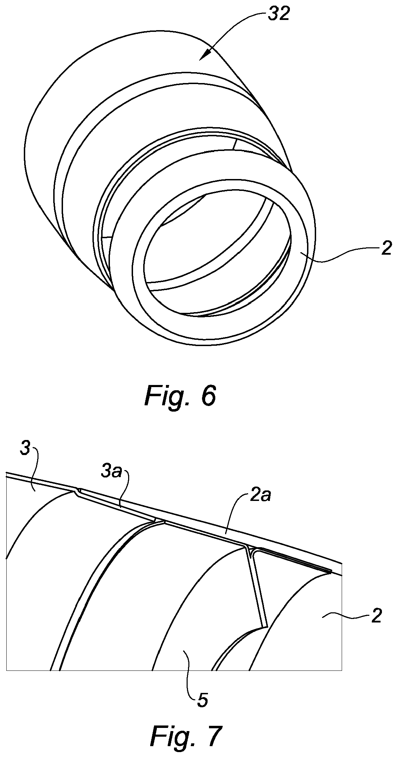

La figure 6 montre un capot externe 32 monobloc formant un tonneau.

La lèvre d'entrée d'air 2 pourra notamment être avantageusement monobloc.

La figure 7 montre un mode de réalisation supplémentaire dans lequel les portions de recouvrement 2a, 3a sont assemblées par surmoulage.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de fabrication d'une structure d'entrée d'air (1) d'une nacelle de turboréacteur comprenant une structure de lèvre d'entrée d'air (2) et un capot externe (3) de structure d'entrée d'air, **caractérisé en ce qu'**il comprend les étapes suivantes visant à :
- réaliser séparément la structure de lèvre d'entrée d'air (2) et le capot externe (3) de manière à ce que des peaux externes de la structure de lèvre d'entrée d'air (2) et du capot externe (3) sont prolongées pour réaliser des portions de recouvrement (2a, 3a), la portion de recouvrement (2a) de la structure de lèvre d'entrée d'air (2) étant destinée à recouvrir la portion de recouvrement (3a) du capot externe (3), les portions de recouvrement (2a, 3a) étant conformées de manière à ce qu'une surface externe de la portion de recouvrement de la structure de lèvre d'entrée d'air (2) assure une continuité avec une surface externe du capot externe (3) ;
- solidariser les portions de recouvrement (2a, 2b), notamment par collage et/ou à l'aide de moyens de fixations.

2. Procédé de fabrication selon la revendication 1, **caractérisé en ce que** la solidarisation s'effectue par surmoulage des portions de recouvrement (2a, 3a).

3. Procédé de fabrication selon l'une quelconque des revendications 1 et 2, **caractérisé en ce que** les portions de recouvrement (2a, 3a) de la structure de lèvre (2) avec le capot externe (3) sont sensiblement longitudinales et au moins partiellement périphérique, de préférence totalement périphérique.

4. Procédé de fabrication selon l'une quelconque des revendications 1 à 3, **caractérisé en ce que** la lèvre d'entrée d'air (2) est monobloc.

5. Procédé selon l'une quelconque des revendications 1 à 4, **caractérisé en ce que** le capot externe (32) est monobloc.

6. Procédé selon l'une quelconque des revendications 1 à 4, **caractérisé en ce que** le capot externe (3) est réalisé en deux demi-parties (30a, 30b), destinées notamment à être éclissées entre elles.

7. Procédé selon l'une quelconque des revendications 5 ou 6, **caractérisé en ce que** le capot externe (3) forme un tonneau.

8. Procédé selon l'une quelconque des revendications 5 ou 6, **caractérisé en ce que** le capot externe (3) forme une virole ouverte (31).

9. Structure d'entrée d'air (1) d'une nacelle de turboréacteur comprenant une structure de lèvre d'entrée d'air (2) et un capot externe (3) de structure d'entrée d'air, les peaux externes de la structure de lèvre d'entrée d'air (2) et du capot externe (3) étant prolongées pour réaliser des portions de recouvrement (2a, 3a), la portion de recouvrement (2a) de la structure de lèvre d'entrée d'air (2) recouvrant la portion de recouvrement (3a) du capot externe (3), les portions de recouvrement (2a, 3a) étant conformées de manière à ce qu'une surface externe de la portion de recouvrement de la structure de lèvre d'entrée d'air (2) assure une continuité avec une surface externe du capot externe (3) ; les portions de recouvrement (2a, 2b), étant solidarisées notamment par collage et/ou à l'aide de moyens de fixations.

## Patentansprüche

1. Verfahren zur Herstellung einer Lufteinlassstruktur (1) für eine Turbodüsenmotorgondel, umfassend eine Lufteinlasslippenstruktur (2) und eine äußere Haube (3) der Lufteinlassstruktur, **dadurch gekennzeichnet, dass** es die folgenden Schritte umfasst, die darauf abzielen:
- getrennt die Lufteinlasslippenstruktur (2) und die äußere Haube (3) durchzuführen, so dass die äußeren Häute der Lufteinlasslippenstruktur (2) und der äußeren Haube (3) verlängert sind, um Abdeckungsabschnitte (2a, 3a) durchzuführen, wobei der Abdeckungsabschnitt (2a) der Lufteinlasslippenstruktur (2) ausgelegt ist, um den Abdeckungsabschnitt (3a) der äußeren Haube (3) abzudecken, wobei die Abdeckungsabschnitte (2a, 3a) derart ausgebildet sind, dass eine äußere Oberfläche des Abdeckungsabschnitts der Lufteinlasslippenstruktur (2) eine Kontinuität mit einer äußeren Oberfläche der äußeren Haube (3) sicherstellt;
- die Abdeckungsabschnitte (2a, 2b) insbesondere durch Kleben und/oder mit Hilfe von Fixierungsmitteln fest miteinander zu verbinden.

2. Verfahren zur Herstellung nach Anspruch 1, **dadurch gekennzeichnet, dass**, die feste Verbindung durch Überformen der Abdeckungsabschnitte (2a, 3a) durchgeführt wird.

3. Verfahren zur Herstellung nach einem der Ansprüche 1 und 2, **dadurch gekennzeichnet, dass** die Abdeckungsabschnitte (2a, 3a) der Lippenstruktur (2) mit der äußeren Haube (3) im Wesentlichen längs gerichtet und mindestens teilweise peripher sind, vorzugsweise vollständig peripher.

4. Verfahren zur Herstellung nach einem der Ansprüche 1 bis 3, **dadurch gekennzeichnet, dass** die Lufteinlasslippe (2) einstückig ist.

5. Verfahren nach einem der Ansprüche 1 bis 4, **dadurch gekennzeichnet, dass** die äußere Haube (32) einstückig ist.

6. Verfahren nach einem der Ansprüche 1 bis 4, **dadurch gekennzeichnet, dass** die äußere Haube (3) aus zwei Halbteilen (30a, 30b) durchgeführt ist, die insbesondere ausgelegt sind, um untereinander verlascht zu sein.

7. Verfahren nach einem der Ansprüche 5 oder 6, **dadurch gekennzeichnet, dass** die äußere Haube (3) eine Trommel bildet.

8. Verfahren nach einem der Ansprüche 5 oder 6, **dadurch gekennzeichnet, dass** die äußere Haube (3) eine offene Zwinge (31) bildet.

9. Lufteinlassstruktur (1) für eine Turbodüsenmotorgondel, umfassend eine Lufteinlasslippenstruktur (2) und eine äußere Haube (3) der Lufteinlassstruktur, wobei die äußeren Häute der Lufteinlasslippenstruktur (2) und der äußeren Haube (3) verlängert sind, um Abdeckungsabschnitte (2a, 3a) durchzuführen, wobei der Abdeckungsabschnitt (2a) der Lufteinlasslippenstruktur (2) den Abdeckungsabschnitt (3a) der äußeren Haube (3) abdeckt, wobei die Abdeckungsabschnitte (2a, 3a) derart ausgebildet sind, dass eine äußere Oberfläche des Abdeckungsabschnitts der Lufteinlasslippenstruktur (2) eine Kontinuität mit einer äußeren Oberfläche der äußeren Haube (3) sicherstellt; wobei die Abdeckungsabschnitte (2a, 2b) insbesondere durch Kleben und/oder mit Hilfe von Fixierungsmitteln fest miteinander verbunden sind

## Claims

1. A method for manufacturing an air inlet structure (1) of a turbojet engine nacelle comprising an air inlet lip structure (2) and an outer cowl (3) of the air inlet structure, **characterized in that** it comprises the following steps aiming at:
- making separately the air inlet lip structure (2) and the outer cowl (3) so that the outer skins of the air inlet lip structure (2) and of the outer cowl (3) are extended in order to make overlapping portions (2a, 3a), the overlapping portion (2a) of the air inlet lip structure (2) being intended to cover the overlapping portion (3a) of the outer cowl (3), the overlapping portions (2a, 3a) being shaped so that an outer surface of the overlapping portion of the air inlet lip structure (2) provides continuity with an outer surface of the outer cowl (3);
- securing the overlapping portions (2a, 2b), in particular by bonding and/or using fastening means.

2. The manufacturing method according to claim 1, **characterized in that** the securing is performed by overmolding the overlapping portions (2a, 3a).

3. The manufacturing method according to any one of claims 1 and 2, **characterized in that** the overlapping portions (2a, 3a) of the lip structure (2) with the outer cowl (3) are substantially longitudinal and at least partially peripheral, preferably completely peripheral.

4. The manufacturing method according to any one of claims 1 to 3, **characterized in that** the air inlet lip (2) is in one piece.

5. The manufacturing method according to any one of claims 1 to 4, **characterized in that** the outer cowl (32) is in one piece.

6. The manufacturing method according to any one of claims 1 to 4, **characterized in that** the outer cowl (3) is made into two half-parts (30a, 30b), intended in particular to be jointed together.

7. The manufacturing method according to any one of claims 5 or 6, **characterized in that** the outer cowl (3) forms a barrel.

8. The manufacturing method according to any one of claims 5 or 6, **characterized in that** the outer cowl (3) forms an open shroud (31).

9. An air inlet structure (1) of a turbojet engine nacelle comprising an air inlet lip structure (2) and an outer cowl (3) of the air inlet structure, the outer skins of the air inlet lip structure (2) and of the outer cowl (3) being extended in order to make overlapping portions (2a, 3a), the overlapping portion (2a) of the air inlet lip structure (2) covering the overlapping portion (3a) of the outer cowl (3), the overlapping portions (2a, 3a) being shaped so that an outer surface of the overlapping portion of the air inlet lip structure (2) provides continuity with an outer surface of the outer cowl (3); the overlapping portions (2a, 2b) being secured in particular by bonding and/or using fastening means.
